Europäisches Patentamt

European Patent Office

Office européen des brevets

(11) Veröffentlichungsnummer: **0 191 732**
A1

# (12) EUROPÄISCHE PATENTANMELDUNG

(21) Anmeldenummer: 86810062.9

(22) Anmeldetag: 05.02.86

(51) Int. Cl.⁴: **B 42 C 7/00**, B 42 F 7/00

---

(30) Priorität: **14.02.85 CH 683/85**

(43) Veröffentlichungstag der Anmeldung: **20.08.86** **Patentblatt 86/34**

(84) Benannte Vertragsstaaten: **AT BE CH DE FR GB IT LI LU NL SE**

(71) Anmelder: **HWB Kunststoffwerke H. Weiss-Buob AG, CH-9427 Wolfhalden (CH)**

(72) Erfinder: **Schorno, René, Vorderlenden, CH-9035 Grub (CH)**

(74) Vertreter: **White, William et al, Isler AG Patentanwalts-Bureau Walchestrasse 23, CH-8006 Zürich (CH)**

---

(54) **Hülle aus Kunststoffolie.**

(57) Die Hülle besteht aus einer Kunststoffolie (1) mit einer Falzschweissnaht (2), deren beide Enden vom Rand (8, 11) der Folie (1) einen Abstand (3) aufweisen. Die Falzschweissnaht (2) besteht aus einer Reihe länglicher Prägestellen (5), die voneinander durch Unterbrüche (4) getrennt sind. Dadurch wird eine wesentliche Verstärkung der Falzschweissnaht (2) erreicht.

HWB Kunststoffwerke
H. Weiss-Buob AG
CH-9427 Wolfhalden

Hülle aus Kunststoffolie

---

Bei einer aus US-A 2 478 132 bekannten Hülle gemäss Oberbegriff des Anspruchs 1 haben die beiden Enden einer Falzschweissnaht einen Abstand vom zugehörigen Rand der Hülle. Damit wird ein Einreissen der Hülle längs der Falzschweissnaht vom Rand her erschwert. Bei längerem Gebrauch der Hülle kommt es jedoch vor, dass die Falzschweissnaht von der Mitte her zu brechen beginnt. Erfindungsgemäss wird dieser Nachteil durch die kennzeichnenden Merkmale des Anspruchs 1 vermieden.

Aus der US-A 4 397 904 ist es zwar bekannt, in einer Falzschweissnaht längs ihrer ganzen Länge Unterbrechungen vorzusehen. Diese Falzschweissnaht besteht aus durch die Unterbrechungen voneinander getrennten, quer zur Richtung der Falzschweissnaht angeordneten Prägestellen. Die Falzschweissnaht erstreckt sich beidseitig bis an den Rand der Hülle.

Aus der FR-A 1 411 000 ist es bekannt, perforierte Trennnähte zwischen einzelnen Beuteln einer aneinanderhängenden
Serie von Verpackungsbeuteln anzuordnen, wobei die Trennnähte aus in Nahtlängsrichtung verlaufenden, voneinander
beabstandeten Langlöchern bestehen. Jeweils an mindestens
einem der Ränder des Beutels mündet ein Langloch in den
Rand, um das Einreissen zu erleichtern.

Ein Ausführungsbeispiel der Erfindung wird nachfolgend anhand der Zeichnung beschrieben. Darin zeigt:

Fig. 1     eine Aktenmappe, und

Fig. 2     einen Ausschnitt aus der Falzschweissnaht der
           Aktenmappe nach Fig. 1 in vergrössertem Massstab.

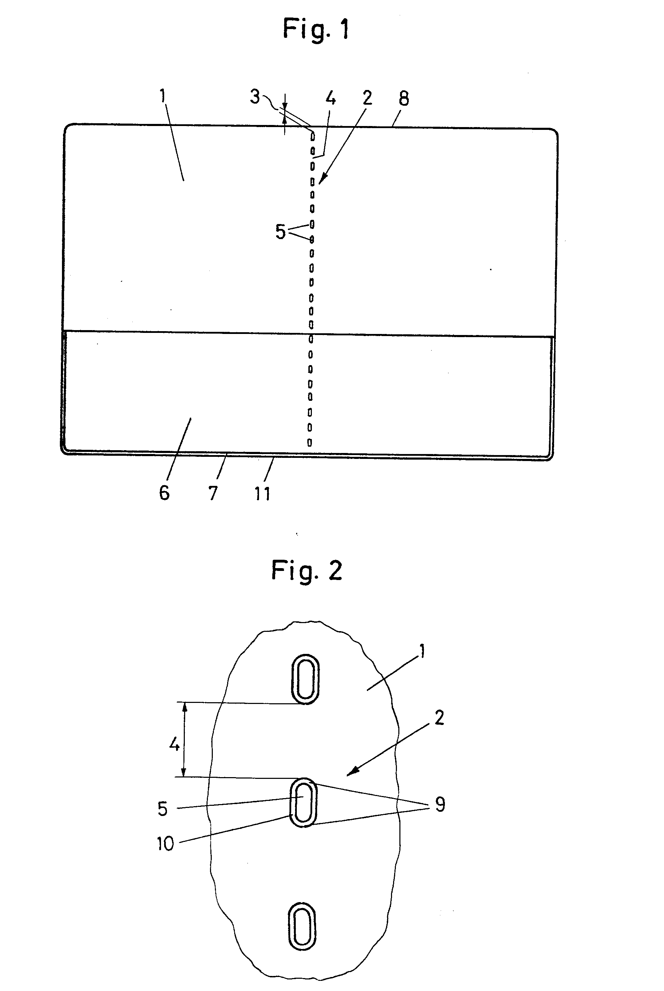

Die Aktenmappe nach Fig. 1 besteht aus einer Hüllfolie 1
aus PVC und einer Taschenfolie 6 aus PVC. Die Taschenfolie
6 ist längs ihres Randes durch eine Schweissnaht 7 auf die
Hüllfolie 1 durch Ultraschall aufgeschweisst. Im gleichen
Arbeitsgang wird mittig eine Falzschweissnaht 2 angebracht,
deren beide Enden von den zugeordneten Rändern 8, 11 einen
Abstand 3 aufweisen. Die Falzschweissnaht 2 besteht aus einzelnen, länglichen Prägestellen 5, welche durch Unterbrechungen 4 voneinander getrennt sind. Die Enden 9 der Prägestellen
5 sind abgerundet. Beim Einprägen der Prägestellen 5 mittels

0191732

der Schweisselektrode wird das verdrängte Material der Folien 1, 6 an den Rand der Prägestellen 5 verdrängt und verbleibt als Wulst 10, welcher ein Weiterreissen eines Risses wirksam verhindert.

Die beschriebene Ausbildung der Falzschweissnaht eignet sich auch für andere Hüllen, z.B. für Briefumschläge aus Kunststoffolie. Als Materialien eignen sich z.B. auch PP und PAE, wobei in diesem Fall die Falzschweissnaht 2 thermisch mittels eines Schweissstempels hergestellt werden könnte.

Patentansprüche

1.      Hülle aus Kunststoffolie mit einer Falzschweissnaht (2), deren beide Enden einen Abstand (3) vom zugehörigen
Rand (8) der Hülle aufweisen, dadurch gekennzeichnet, dass
die Falzschweissnaht (2) längs ihrer gesamten Länge Unterbrechungen (4) aufweist und aus in Richtung der Falzschweissnaht (2) länglichen Prägestellen (5) besteht, die durch die
Unterbrechungen (4) voneinander getrennt sind.

2.      Hülle nach Anspruch 1, dadurch gekennzeichnet,
dass die Enden (9) der Prägestellen (5) abgerundet sind.

3.      Hülle nach Anspruch 1 oder 2, dadurch gekennzeichnet, dass sie als Aktenmappe ausgebildet ist.

4.      Hülle nach Anspruch 3, dadurch gekennzeichnet,
dass an einer Hüllfolie (1) längs mindestens eines Randes
(7) eine Taschenfolie (6) angeschweisst ist, und dass die
Falzschweissnaht (2) die beiden Folien (1,6) miteinander verbindet.

0191732

# Fig. 1

# Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | US-A-2 478 132 (F.S. SCHADE) * Figuren 1,2,6; Spalte 2, Zeilen 22-27 * | 1-4 | B 42 C 7/00 B 42 F 7/00 |
| | --- | | |
| D,Y | FR-A-1 411 000 (L. LAGUERRE) * Figuren 5,6; Seite 2; Spalte 1, Zeilen 10-13 * | 1-4 | |
| | --- | | |
| D,A | US-A-4 397 904 (HULBER et al.) * Figuren 1,3,9; Spalte 1, Zeilen 53-56; Spalte 2, Zeilen 57-60; Spalte 3, Zeilen 45-58; Spalte 4, Zeilen 10-13 * | 1-4 | |
| | --- | | |
| A | EP-A-0 024 833 (M.J. ANTHONY et al.) * Ansprüche 1-3 * | 1 | |
| | ----- | | RECHERCHIERTE SACHGEBIETE (Int. Cl.4) B 42 C B 42 F B 31 B |

Der vorliegende Recherchenbericht wurde für alle Patentansprüche erstellt.

| Recherchenort DEN HAAG | Abschlußdatum der Recherche 06-05-1986 | Prüfer WEBER P.L.P. |
|---|---|---|